# EUROPEAN PATENT SPECIFICATION

(11) **EP 1 816 838 B1**
(45) Date of publication and mention of the grant of the patent: **04.11.2009**
(21) Application number: 07002480.7
(22) Date of filing: 06.02.2007
(51) Int. Cl.: H04M 1/725

(54) **A method for any ticker while the user is in any application session in a mobile communication device**
Eine Methode für jeden Ticker, während der Benutzer sich in einer Anwendungssession in einem Mobilfunkgerät befindet
Procédé de message défilant lorsque l'utilisateur est en cours de session d'une application dans un dispositif de communication mobile

(30) Priority: 06.02.2006 IN CH01882006; 17.01.2007 KR 20070005312
(43) Date of publication of application: 08.08.2007
(73) Proprietor: Samsung Electronics Co., Ltd., Suwon-si, Gyeonggi-Do (KR)
(72) Inventor: Gudi, Venkata Ramana Bagmane Lakeview, Byrasandra, Bangalore - 560093, Kamataka (IN); Gourannavar, Adappa Bagmane Lakeview, Byrasandra, Bangalore . 560093, Kamataka (IN)
(74) Representative: Boakes, Jason Carrington

(56) References cited:
- EP-A- 1 608 137
- WO-A-99/16181
- US-A1- 2005 039 135
- US-B1- 6 459 906

## Description

The present invention, in general, relates to mobile communication devices. Particularly, but not exclusively, this invention relates to the field of a User Interface (UI) which aims to provide a mechanism to view a just arrived message or any notification while any user application is in progress or a user is in any session. More particularly, but again not exclusively, the invention relates to a method for any ticker while the user is in any application session in a mobile communication device.

The current technology does not provide for viewing a message while any user application is in progress or a user is in any session without closing the current application or session.

For example, if the user is engaged in any application, like watching an interesting video clip or playing a java game, or the user is in a different session on the communicating device and there is a message or notification received by the device, currently, the user has to close the current application or session to view the received message or notification. Otherwise, the user can view the message or notification after his current activity is finished.

If the user is engaged in any application, like watching an interesting video clip or playing a java game, or the user is in a different session on the handset and a message or notification arrived at the device or it is in his inbox, he would be curious to know from whom the message came or if is it something urgent. As a result, the excitement with which the user was watching the video fades away, and the user has to stop the video in order to read the message.

It is an aim of the present invention to at least partly mitigate the above-mentioned problems.

Document EP-A-1608137 discloses a mobile communication terminal and method for processing a received text message while outputting digital broadcasting data. When the mobile communication terminal operates in broadcasting mode, a short message service (SMS) message received through a phone module is displayed through digital multimedia broadcasting (DMB) module.

Document US 2005/039135 discloses the navigation of tickers on communications devices using a navigation mechanism associated with the communications devices. The navigation mechanisms can permit a user to navigate through content in a ticker or to configure presentation attributes of the ticker. Alternatively, the navigation mechanisms can allow the user to initiate secondary actions associated with ticker content, such as launching uniform resource identifiers, launching local applications, accessing remote data or applications, or performing other interactive actions. When the secondary action requires a network connection, the mobile communication device can immediately transmit a request through the network if a network connection is present or can wait until a network connection becomes available. The navigation mechanism can be a keypad of a mobile communication device, soft keys, voice command receivers, motions sensors that respond to motion of the mobile communications device, or other input devices.

An aim of embodiments of the present invention is to enable a user to view a just arrived MMS message or notification when the user is in the middle of any interesting application like watching video clip or playing a game or the user is in a different session.

Another aim of embodiments of the present invention is to enable applications to display message or notification without exiting the current application.

A further aim of embodiments of the present invention is to enable a user to view the message or notification on or above the soft key area or on top of the annunciator bar depending on the type of application he/she is in now. Therefore, the user will be able to continue executing the current application or session uninterrupted, without missing some urgent information.

In certain embodiments of this invention, a method displays a ticker while the user is in an application session in a mobile communication device. In certain embodiments of the present invention, the method registers a callback with the messaging module, which is called when a new message arrives. In certain embodiments of the present invention, the method displays the arrived new message in the form of a scrolling message or ticker on either the soft key area or on the annunciator bar area of the device.

In certain embodiments of the present invention, the method continues the current application by the user while the new message is scrolled or shown as a ticker.

The present invention provides a method as defined by claim 1. In certain embodiments a callback takes care of the changes in the User Interface (UI) if the application is in progress. The user can decide to either continue the current application or stop the application in order to reply to the incoming message. If the user chooses to ignore the incoming message, he switches off the scroll or ticker by pressing the clear key. If the incoming message happens to be a Multi-Media Messaging Service (MMS), only the notification is displayed, and based on the requirement, the user can decide to stop the current application and download the MMS or continue in the current application. The incoming message or notification can be in any format and the message or notification is viewed irrespective of display mode. The message can be displayed irrespective of any language mode and can be scrolled in any direction on the display device. The scroll or ticker can be controlled in plurality of ways through any input device and the received message can be stored in the device. The message or notification can be scrolled on any part of the display irrespective of any application in progress where the application or session is either triggered manually by the user or automatically triggered by the device but will be similarly controlled. The display device can be internal or external to the communication device and can be a fixed, flexible or rotatable one. Communicating device maintains display status as idle or used by an application or session to determine how to display incoming message or notification and if the display is an idle state, the message is displayed in Message application window. The user can set the display status ON or OFF to view message or notification in scrolling manner irrespective of the application or session in progress.

The above and other objects, features and advantages of the present invention will become more apparent from the ensuing detailed description of the invention, given by way of example only, taken in conjunction with the accompanying drawings, in which

**Figure 1** is a flow chart describing the steps which enable viewing of new message while an application is in progress.

**Figure 2A, 2B** and **2C** depict screen display when the message arrives.

The preferred embodiments of the present invention will now be explained with reference to the accompanying drawings. It should be understood however, that the disclosed embodiments are merely exemplary embodiments of the invention, which may be implemented in various forms. The following description and drawings are not to be construed as limiting the invention and the specific details are provided for a thorough understanding of the present invention, as the basis for the claims and as a basis for teaching one skilled in the art how to practice the invention. However in certain instances, well-known or conventional details are omitted in order not to unnecessarily obscure the present invention in detail.

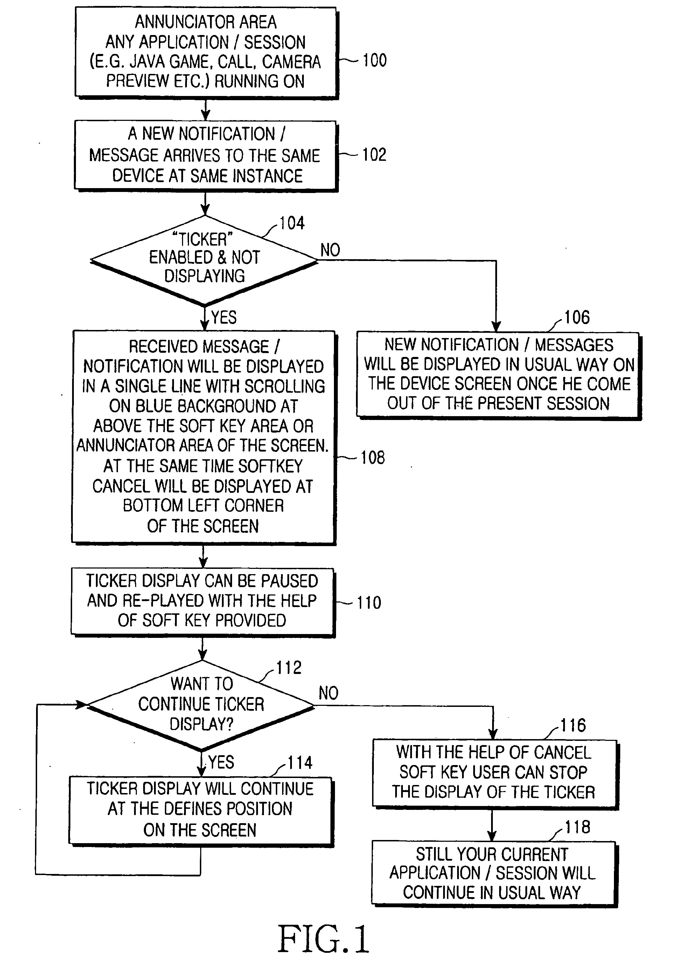

Figure 1 is a flow chart describing the steps which enable viewing of a new message while an application is in progress.

When any application like video streaming or java game is in progress or a user is in a different session (100), it occupies the edit area of the screen. Now, when the message arrives (102), a mobile communication device determines whether Ticker is enabled or not (104). And if Ticker is not enabled, new notification/messages will be displayed in a usual way on the device screen once the user exits out of the present session (106).

And if Ticker is enabled, depending on the type of application, the notification/message can be displayed in a scrolling fashion (or ticker) on or above the soft key area or on the annunciator bar area (108). The Ticker display can be paused and re-played with the help of a soft key provided (110). A mobile communication device determines whether a user wants to continue the Ticker display or not (112). If the user wants to continue the Ticker display, the Ticker display will continue at a previously defined position on the screen (114). However, if the user doesn't want to continue the Ticker display, with the help of a CANCEL soft key, the user can stop the display of the ticker (116), and the current Application / session will continue in the usual way (118).

It should be noted that the host for storing the applications includes but is not limited to a microchip, microprocessor, handheld communication device, computer, rendering device or a multi function device.

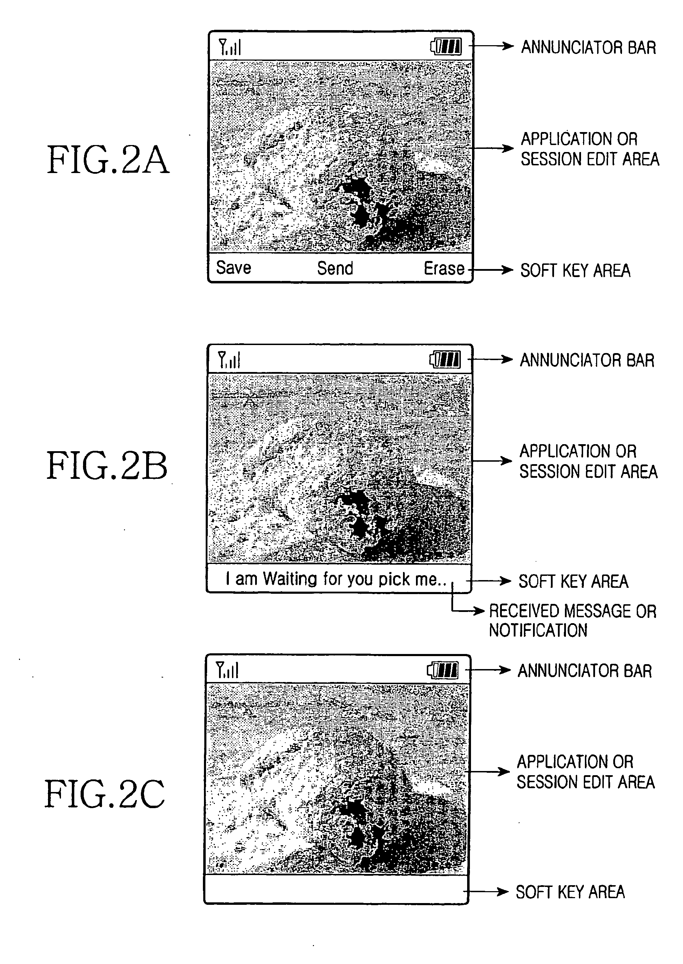

Referring to Figure 2A, before viewing the message, a callback would be registered with the messaging module, which would be called when a new message arrives, if the application is in progress the callback would take care of the changes in the user interface (UI). The new message will now be displayed in the form of a scrolling message (or ticker) on either the softkey area or on the annunciator bar area. The user can opt to remain in the current application while the new message is scrolled or exit in order to reply to the incoming message. If he chooses to ignore the incoming message, he switches off the scroll (or ticker) by pressing the clear key.

If the incoming message happens to be a MMS, only the notification will be displayed. Based on need, the user can decide to exit the current application and download the MMS or continue in the current application.

Referring to Figure 2B and while viewing the message and Figure 2C.

After viewing the message, the advantages of these two aspects of the invention are described next. The main advantage of the invention is that the user need not have to stop the application in between to view the arrived message. With the invention the user will not miss any important message, which may be neglected if the user so chooses. It will also be obvious to those skilled in the art that other control methods and apparatuses can be derived from the teachings of the present invention as disclosed by the description and the accompanying drawings and these shall also be considered within the scope of the present invention.

Although the present invention has been fully described in connection with the preferred embodiments thereof with reference to the accompanying drawings, it is to be noted that various changes and modifications are possible and are apparent to those skilled in the art. Such changes and modifications are to be understood as included within the scope of the present invention as further defined by the appended claims.

## Claims

1. A method for displaying a ticker while a user is in an application session in a mobile communication device comprising:
(a) receiving a notification of an incoming Multi-Media Service (MMS) message (102);
(b) displaying the arrived notification in the form of a scrolling message or ticker on or above a softkey area of a screen of the device or on an annunciator bar area of the screen without exiting the current application (108);
(c) continuing the current application by the user while the notification of the new MMS message is scrolled or shown as a ticker (114); and
(d) determining whether the user decides to stop the current application and download the MMS message or continue the current application.

2. The method as in claim 1, wherein if the user chooses to ignore the MMS message, the user switches off the scroll or ticker by pressing a clear key (116).

3. The method as in any preceding claim, wherein if it is determined that the user decides to continue the current application, the current application is continued.

4. The method as in any preceding claim, wherein the MMS message or notification is in any format.

5. The method as in any preceding claim, wherein the MMS message or notification is scrolled in any direction on a display device.

6. The method as in any preceding claim, wherein the scroll or ticker is controlled through an input device and the MMS message is stored in the device.

7. The method as in claim 5, wherein the message or notification is scrolled on any part of the display irrespective of any application in progress where the application or session is either triggered manually by the user or automatically triggered by the device but is similarly controlled.

8. The method as in claim 7, wherein the display device is located anywhere with respect to the communication device and is one of a fixed, flexible or rotatable one.

9. The method as in any preceding claim, wherein the communication device maintains a display status as idle or used by an application or a session to determine how to display the MMS message or notification.

10. The method as in claim 9, wherein the MMS message is displayed in a message application window if the display state is the idle state.

## Patentansprüche

1. Verfahren zum Anzeigen eines Tickers, während sich ein Benutzer in einer Anwendungssession auf einem mobilen Kommunikationsgerät befindet, das Folgendes umfasst:
(a) Empfangen einer Benachrichtigung über eine eingehende MMS-(Multi-Media Service)-Nachricht (102);
(b) Anzeigen der eingegangenen Benachrichtigung in Form einer laufenden Nachricht oder eines Tickers in oder über einem Softkey-Bereich eines Bildschirms des Gerätes oder in einem Anzeigebalkenbereich des Bildschirms, ohne die aktuelle Anwendung (108) zu verlassen;
(c) Fortsetzen der aktuellen Anwendung durch den Benutzer, während die Benachrichtigung über die neue MMS-Nachricht als Ticker (114) abläuft oder angezeigt wird; und
(d) Ermitteln, ob der Benutzer beschließt, die aktuelle Anwendung zu stoppen und die MMS-Nachricht herunterzuladen oder die aktuelle Anwendung fortzusetzen.

2. Verfahren nach Anspruch 1, wobei der Benutzer, wenn er beschließt, die MMS-Nachricht zu ignorieren, den Textlauf oder Ticker durch Drücken einer Löschtaste (116) abschaltet.

3. Verfahren nach einem der vorherigen Ansprüche, wobei die aktuelle Anwendung fortgesetzt wird, wenn festgestellt wird, dass der Benutzer beschließt, die aktuelle Anwendung fortzusetzen.

4. Verfahren nach einem der vorherigen Ansprüche, wobei die MMS-Nachricht oder Benachrichtigung in einem beliebigen Format ist.

5. Verfahren nach einem der vorherigen Ansprüche, wobei die MMS-Nachricht oder Benachrichtigung in einer beliebigen Richtung auf einem Anzeigegerät abgerollt wird.

6. Verfahren nach einem der vorherigen Ansprüche, wobei der Textlauf oder Ticker durch ein Eingabegerät gesteuert und die MMS-Nachricht auf dem Gerät gespeichert wird.

7. Verfahren nach Anspruch 5, wobei die Nachricht oder Benachrichtigung in einem beliebigen Teil des Displays unabhängig von einer laufenden Anwendung abgerollt wird, wo die Anwendung oder Session entweder manuell vom Benutzer oder automatisch vom Gerät ausgelöst, aber auf ähnliche Weise gesteuert wird.

8. Verfahren nach Anspruch 7, wobei sich das Anzeigegerät mit Bezug auf das Kommunikationsgerät an einer beliebigen Stelle befindet und entweder fest, flexibel oder drehbar ist.

9. Verfahren nach einem der vorherigen Ansprüche, wobei das Kommunikationsgerät einen Anzeigestatus als untätig oder von einer Anwendung oder einer Session benutzt beibehält, um festzustellen, wie die MMS-Nachricht oder Benachrichtigung angezeigt werden soll.

10. Verfahren nach Anspruch 9, wobei die MMS-Nachricht in einem Nachrichtenanwendungsfenster angezeigt wird, wenn der Anzeigestatus der Untätigkeitsstatus ist.

## Revendications

1. Procédé d'affichage d'un message défilant lorsqu'un utilisateur est en cours de session d'une application dans un dispositif de communication mobile, comprenant :
(a) l'opération consistant à recevoir une notification d'un message MMS (service multimédia) arrivant (102) ;
(b) l'opération consistant à afficher la notification à son arrivée sous la forme d'un message défilant ou déroulant sur ou au-dessus d'une zone à touches programmables d'un écran du dispositif, ou bien sur une zone de la barre annonciatrice de l'écran, sans sortir de l'application actuelle (108) ;
(c) l'opération consistant à autoriser l'utilisateur à continuer l'application actuelle pendant que la notification du nouveau message MMS défile ou est présentée en tant que message défilant (114) ; et
(d) l'opération consistant à déterminer si l'utilisateur décide d'arrêter l'application actuelle et de télécharger le message MMS, ou bien de continuer l'application actuelle.

2. Procédé selon la revendication 1, cas dans lequel si l'utilisateur choisit d'ignorer le message MMS, l'utilisateur désactive le message défilant ou déroulant en appuyant sur une touche Effacer (116).

3. Procédé selon l'une quelconque des revendications précédentes, cas dans lequel l'application actuelle se poursuivra s'il a été déterminé que l'utilisateur décide de continuer l'application actuelle.

4. Procédé selon l'une quelconque des revendications précédentes, la présentation du message MMS ou de la notification ayant lieu sous n'importe quel format.

5. Procédé selon l'une quelconque des revendications précédentes, le défilement du message MMS ou de la notification se faisant dans n'importe quel sens sur un dispositif d'affichage.

6. Procédé selon l'une quelconque des revendications précédentes, le message défilant ou déroulant étant commandé par l'intermédiaire d'un dispositif de saisie et le message MMS étant stocké dans le dispositif.

7. Procédé selon la revendication 5, le défilement du message ou de la notification ayant lieu sur n'importe quelle partie de l'afficheur quelle que soit l'application en cours d'exécution, où l'application ou la session est soit déclenché manuellement par l'utilisateur, soit déclenché automatiquement par le dispositif, mais est commandé de façon similaire.

8. Procédé selon la revendication 7, le dispositif d'affichage étant positionné en n'importe quel emplacement par rapport au dispositif de communication et se présentant sous la forme de l'un des dispositifs suivants, à savoir fixe, flexible ou rotatif.

9. Procédé selon l'une quelconque des revendications précédentes, le dispositif de communication conservant un état d'affichage sous la forme En veille ou Utilisé par une application ou une session afin de déterminer la manière dont le message MMS ou la notification sera affiché.

10. Procédé selon la revendication 9, le message MMS étant affiché dans une fenêtre à messages de l'application si l'état d'affichage est dans l'état En veille.
